# EUROPÄISCHE PATENTSCHRIFT

(11) **EP 2 864 852 B1**
(45) Veröffentlichungstag und Bekanntmachung des Hinweises auf die Patenterteilung: **02.05.2018**
(21) Anmeldenummer: 13731129.6
(22) Anmeldetag: 24.06.2013
(51) Int. Cl.: G06F 3/01

(54) **BEDIENSYSTEM FÜR EIN KRAFTFAHRZEUG**
OPERATING SYSTEM FOR A MOTOR VEHICLE
SYSTÈME DE COMMANDE POUR VÉHICULE À MOTEUR

(30) Priorität: 26.06.2012 DE 102012012697
(43) Veröffentlichungstag der Anmeldung: 29.04.2015
(73) Patentinhaber: Leopold Kostal GmbH & Co. KG, 58513 Lüdenscheid (DE)
(72) Erfinder: BLÄSING, Frank, 59457 Werl (DE)
(74) Vertreter: Kerkmann, Detlef
(86) Internationale Anmeldenummer: PCT/EP2013/063085
(87) Internationale Veröffentlichungsnummer: WO 2014/001227

(56) Entgegenhaltungen:
- DE-A1-102007 040 288
- US-A1- 2005 197 843
- US-A1- 2009 102 788
- US-A1- 2012 105 613

## Beschreibung

Die Erfindung betrifft ein Bediensystem für ein Kraftfahrzeug, mit einer ersten Bedieneinheit zur Erfassung von Benutzergesten, mit mindestens einer zweiten Bedieneinheit zur Erfassung von Benutzereingaben, und mit einer Auswerteeinheit, welche den von den Bedieneinheiten erfassten Benutzergesten und Benutzereingaben Bedienfunktionen zuordnet.

Durch die Implementierung optischer Sensoren und insbesondere von Kamerasystemen in Kraftfahrzeugen ergibt sich zunehmend die Möglichkeit, berührungslose Bedienelemente einzusetzen, die auf einer Gestenerkennung beruhen. Bei Hand- oder Fingergestenerkennungssystemen ergibt sich das Problem falsch erkannter Gesten, verursacht durch die Betätigung konventioneller Bedienelemente, die sich im Erfassungsbereich eines Gestensensors befinden, indem beispielsweise Bewegungen zur Betätigung von Schaltern oder Schalthebeln vom Gestensensor erfasst und vom Gestenerkennungssystem als Benutzereingaben interpretiert werden. Die hierdurch fehlerhaft ausgelösten Bedienfunktionen können zu unerwünschten oder sogar zu gefährlichen Situationen führen.

Um dieses zu vermeiden ist es bekannt, für das Gestenerkennungssystem räumliche Grenzen festzulegen, innerhalb derer Gesten erkannt werden sollen und in dem so definierten Bereich keine weiteren Bedienelemente anzuordnen. Hierbei ergibt sich jedoch das Problem, dass für sogenannte multimodale Bedienkonzepte Gesten auch an Orten erkannt werden müssen, an denen sich anderen Bedienelemente befinden (wie beispielsweise eine Wischgeste während der Bedienung eines Drehdrückstellers).

Ein Bediensystem mit einem multimodalen Bedienkonzept ist in der deutschen Offenlegungsschrift DE 10 2007 040 288 A1 beschrieben. In diesem Dokument geht es darum, mehrere gleichzeitige Bedienhandlungen, die einzeln keine oder eine bestimmte Bedeutung haben, durch Kombination mit einer weiteren Bedienhandlung eine gemeinsame weitere Bedeutung zuzuordnen. Derartige genau definierte Betätigungskombinationen sind normalerweise unkritisch.

Problematisch ist es dagegen, wenn die Bewegung einer konventionellen Bedienhandlung, etwa zur Betätigung eines Schalters, im Rahmen einer Gestenerkennung fehlerhaft als eine Bediengeste interpretiert wird.

Es stellte sich die Aufgabe, ein Bediensystem zu schaffen, welches Gefährdungen, die aus derartigen Fehlern resultieren, mit hoher Sicherheit vermeidet.

Diese Aufgabe wird erfindungsgemäß dadurch gelöst, dass die Auswerteeinheit prüft, ob eine Benutzergeste und eine Benutzereingabe zugleich innerhalb desselben Zeitfensters und innerhalb desselben räumlichen Bereichs erfasst wurden, und dass die Auswerteeinheit im Falle eines positiven Ergebnisses der Prüfung die der Benutzergeste zugeordnete Bedienfunktion modifiziert oder unterdrückt.

Die Erfindung geht von der Idee aus, dass wenn zur Zeit einer Gestenerkennung gleichzeitig eine Eingabe über ein anderes Bedienelement im Erfassungsbereich der Gestensensorik erfolgt und der Ort der erkannten Geste und der Ort des anderen Bedienelementes innerhalb eines räumlichen Toleranzbereichs übereinstimmen, es sich bei der erfassten Geste mit großer Wahrscheinlichkeit nicht um eine als Bediengeste gemeinte Bewegung handelt. Die Ausführung einer unerwünschten Bedienfunktion wird dadurch verhindert, dass unter diesen Umständen die der Geste zugeordnete Bedienfunktion unterdrückt oder zumindest modifiziert wird.

Von der Modifizierung oder Unterdrückung ausgenommen werden können gegebenenfalls Bedienfunktionen zu Gesten, welche in der Auswerteeinheit als erwartbar zusammen mit bestimmten Eingaben auftretend vordefiniert sind.

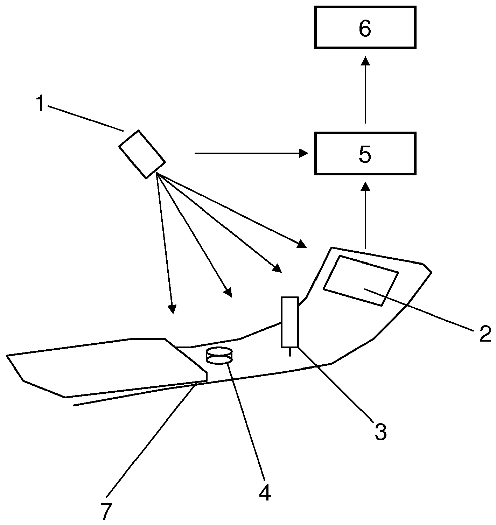

Nachfolgend soll die Erfindung anhand der Zeichnung näher erläutert werden. Die einzige Figur skizziert den prinzipiellen Aufbau eines erfindungsgemäßen Bediensystems. Schematisch dargestellt ist der Blick auf die Mittelkonsole 7 eines Kraftfahrzeugs. Oberhalb der Mittelkonsole 7 ist eine erste Bedieneinheit 1 angeordnet, die Hand- und Fingergesten erfassen kann. Zur Gestenerkennung weist die erste Bedieneinheit 1 einen kapazitiven oder vorzugsweise optischen Sensor auf, der Bewegungen des Fahrers und gegebenenfalls des Beifahrers berührungslos erfasst.

In einer bevorzugten Ausführungsform ist die erste Bedieneinheit 1 als eine auf die Mittelkonsole 7 blickende Kamera ausgebildet. Die Kamera 1 kann besonders vorteilhaft als eine Stereokamera ausgeführt sein, welche Gegenstände räumlich erfassen kann. Äußerst vorteilhaft ist die Verwendung einer Time-of-Flight-Kamera, welche direkte Abstandsmessungen ermöglicht, oder auch der Einsatz einer Wärmebildkamera, die unbedeckte Körperstellen von Personen aufgrund ihrer charakteristischen Temperatur gut von Gegenständen der Umgebung unterscheiden kann.

Die Kamera 1 gibt ihre Ausgangssignale an eine Auswerteeinheit 5, welche hieraus Bewegungen erkennt und aus der Abfolge von Bewegungen ausgeführte Bediengesten ermittelt und den ermittelten Bediengesten auszulösende Bedienfunktionen zuordnet. Die Auswerteeinheit 5 kann daraufhin Fahrzeugkomponenten 6 entsprechend der durch die ermittelten Bediengesten ausgewählten Bedienfunktionen ansteuern.

Die Auswerteeinheit 5 kann entweder durch eine zentrale Elektronik des Kraftfahrzeugs ausgeführt sein, oder auch durch eine speziell der ersten Bedieneinheit 1 zugeordneten Elektronikkomponente, welche mit weiteren, hier nicht dargestellten Elektronikkomponenten des Kraftfahrzeugs durch Datenaustausch kommunizieren kann. In der Figur ist, ohne Beschränkung der Allgemeinheit, lediglich die erstgenannte Möglichkeit dargestellt.

In der Mittelkonsole 7 sind mehrere zweite Bedieneinheiten 2, 3, 4 erkennbar und zwar speziell ein Touchpad 2, ein Gangwahlhebel 3 und ein Drehsteller 4. Diesen zweiten Bedieneinheiten 2, 3, 4 gemeinsam ist, dass sie zur Betätigung einen berührenden Zugriff durch eine Person erfordern.

Problematisch hierbei ist, dass die dazu nötige Bewegung des Fahrers oder des Beifahrers auch durch die erste Bedieneinheit 1 erfasst wird. Je nach Art der ausgeführten Bewegung kann diese durch die Auswerteinheit 5 als eine Benutzergeste interpretiert beziehungsweise auch fehlinterpretiert werden. Löst die Auswerteinheit nun aufgrund der erkannten Geste die zugehörige, vermeintlich erwünschte Bedienfunktion aus, so ist nicht auszuschließen, dass hierdurch eine gefährliche Situation entstehen kann. So kann beispielsweise eine unerwartet ausgeführte Bedienfunktion den Fahrer irritieren und dadurch eine Fehlreaktion des Fahrers auslösen.

Die Auswerteeinheit 5 prüft daher, bei zwei zeitlich nahe beieinander erfassten Ereignissen der ersten Bedieneinheit 1 und einer der zweiten Bedieneinheiten 2, 3, 4, ob eine Bediengeste in dem Raumbereich erfasst wurde, in der sich die das Erfassungssignal sendende zweite Bedieneinheit 2, 3, 4 befindet. Da die beiden erfassten Ereignisse hinsichtlich ihrer räumlichen und zeitlichen Koordinaten üblicherweise nicht exakt übereinstimmen, berücksichtigt die Auswerteeinheit 5 für die Prüfungen ein Zeitfenster und einen Raumbereich als Toleranzbereich.

Es kann dazu vorteilhaft vorgesehen werden, dass die Auswerteeinheit 5 Erfassungssignale der ersten Bedieneinheit 1 vor der Verarbeitung für einen vorgegebenen Zeitraum zwischenspeichert, so dass auch eine verzögerte Erfassung einer Benutzereingabe durch eine zweite Bedieneinheit 2, 3, 4 die weitere Verarbeitung der erkannten Benutzergeste beeinflussen kann.

Stellt die Auswerteeinheit 5 räumlich und zeitlich zusammenfallende Erfassungssignale der ersten und einer zweiten Bedieneinheit 1, 2, 3, 4 fest, so modifiziert sie die Verwendung der Erfassungssignale gegenüber der üblichen Nutzung, so dass jederzeit ein sicherer Zustand erreicht wird. Im Zweifelfall verwirft die Auswerteeinheit 5 das die erfasste Bediengeste repräsentierende Signal vollständig, so dass die zugehörige Bedienfunktion einfach unterdrückt wird.

Diese Vorgehensweise beruht auf der Voraussetzung, dass die durch Gestensteuerung auslösbaren Bedienfunktionen eine geringere Priorität aufweisen, als Bedienfunktionen, die durch die Betätigung der zweiten Bedienelemente steuerbar sind. Daher wird im Falle einer nicht genau definierten Situation auf die Ausführung einer gestengesteuerten Bedienfunktion zugunsten einer erhöhten Sicherheit verzichtet.

### Bezugszeichen

- 1: Kamera (erste Bedieneinheit)
- 2: Touchpad (zweite Bedieneinheit)
- 3: Gangwahlhebel (zweite Bedieneinheit)
- 4: Drehsteller (zweite Bedieneinheit)
- 5: Auswerteeinheit
- 6: Komponenten
- 7: Mittelkonsole

## Patentansprüche

1. Bediensystem für ein Kraftfahrzeug,
mit einer ersten Bedieneinheit (1) zur berührungslosen Erfassung von Benutzergesten,
mit mindestens einer zweiten Bedieneinheit (2, 3, 4) zur Erfassung von Benutzereingaben, die zur Betätigung einen berührenden Zugriff durch eine Person erfordert, und
mit einer Auswerteeinheit (5), welche den von den Bedieneinheiten (1, 2, 3, 4) erfassten Benutzergesten und Benutzereingaben Bedienfunktionen zuordnet,
**dadurch gekennzeichnet,**
**dass** die Auswerteeinheit (5) ausgelegt ist zu prüfen, ob eine Benutzergeste und eine Benutzereingabe zugleich innerhalb desselben Zeitfensters und innerhalb desselben räumlichen Bereichs erfasst wurden, und
**dass** die Auswerteeinheit (5) im Falle eines positiven Ergebnisses der Prüfung die der Benutzergeste zugeordnete Bedienfunktion modifiziert oder unterdrückt.

2. Bediensystem nach Anspruch 1, **dadurch gekennzeichnet, dass** die Auswerteeinheit (5) eine Ausnahmeliste von bekannten Kombinationen von Benutzergesten und Benutzereingaben aufweist, bei deren gemeinsamer Erfassung die Auswerteeinheit (5) die der Benutzergeste zugeordnete Bedienfunktion weder modifiziert noch unterdrückt.

3. Bediensystem nach Anspruch 1, **dadurch gekennzeichnet, dass** die Auswerteeinheit (5) Bedienfunktionen aufgrund erkannter Bediengesten erst nach Ablauf einer vorgegebenen Zeitspanne auslöst.

4. Bediensystem nach Anspruch 1, **dadurch gekennzeichnet, dass** die erste Bedieneinheit (1) eine Sensorik zur Erkennung von Handgesten ausbildet.

5. Bediensystem nach Anspruch 1, **dadurch gekennzeichnet, dass** die erste Bedieneinheit (1) eine Sensorik zur Erkennung von Fingergesten ausbildet.

6. Bediensystem nach Anspruch 1, **dadurch gekennzeichnet, dass** die erste Bedieneinheit (1) kapazitive Sensoren aufweist.

7. Bediensystem nach Anspruch 1, **dadurch gekennzeichnet, dass** die erste Bedieneinheit (1) optische Sensoren aufweist.

8. Bediensystem nach Anspruch 7, **dadurch gekennzeichnet, dass** die erste Bedieneinheit (1) eine bilderfassende Sensorik aufweist.

9. Bediensystem nach Anspruch 8, **dadurch gekennzeichnet, dass** Bestandteil der bilderfassende Sensorik eine Stereokamera, eine Time-of-Flight-Kamera oder eine Wärmebildkamera ist.

10. Bediensystem nach Anspruch 1, **dadurch gekennzeichnet, dass** die erste Bedieneinheit (1) im Dachbereich oder in der Mittelkonsole (6) eines Kraftfahrzeugs angeordnet ist.

11. Bediensystem nach Anspruch 1, **dadurch gekennzeichnet, dass** eine zweite Bedieneinheit (2, 3, 4) durch einen Schalter, Drehschalter oder Drehsteller (4) ausgeführt ist.

12. Bediensystem nach Anspruch 1, **dadurch gekennzeichnet, dass** eine zweite Bedieneinheit (2, 3, 4) ein Touchpad (2) ist.

13. Bediensystem nach Anspruch 1, **dadurch gekennzeichnet, dass** eine zweite Bedieneinheit (2, 3, 4) ein Gangwahlhebel (3) ist.

14. Bediensystem nach Anspruch 1, **dadurch gekennzeichnet, dass** die Auswerteeinheit (5) aus mehreren, den Bedieneinheiten (1, 2, 3, 4) zugeordneten Elektronikeinheiten besteht, die miteinander kommunizieren.

## Claims

1. Operating system for a motor vehicle,
having a first operating unit (1) for the non-contact recording of user gestures,
having at least one second operating unit (2, 3, 4) for recording user inputs which requires contact access by a person for the purpose of actuating it, and
having an analysis unit (5) which assigns the user gestures and user inputs recorded by the operating units (1, 2, 3, 4) to operating functions,
**characterised in that**
the analysis unit (5) is designed to check whether a user gesture and a user input have been recorded at the same time within the same time window and within the same spatial area, and
that, in the event of a positive result of the check, the analysis unit (5) modifies or suppresses the operating function assigned to the user gesture.

2. Operating system according to Claim 1, **characterised in that** the analysis unit (5) incorporates an exception list of known combinations of user gestures and user inputs and, if these are recorded together, the analysis unit (5) neither modifies nor suppresses the operating function assigned to the user gesture.

3. Operating system according to Claim 1, **characterised in that** the analysis unit (5) does not trigger any operating functions based on detected operating gestures until a prescribed period of time has elapsed.

4. Operating system according to Claim 1, **characterised in that** the first operating unit (1) constitutes a sensor system for detecting hand gestures.

5. Operating system according to Claim 1, **characterised in that** the first operating unit (1) constitutes a sensor system for detecting finger gestures.

6. Operating system according to Claim 1, **characterised in that** the first operating unit (1) features capacitive sensors.

7. Operating system according to Claim 1, **characterised in that** the first operating unit (1) features optical sensors.

8. Operating system according to Claim 7, **characterised in that** the first operating unit (1) features an image capturing sensor system.

9. Operating system according to Claim 8, **characterised in that** a stereo camera, a time-of-flight camera or a thermal imaging camera is an integral element of the image capturing sensor system.

10. Operating system according to Claim 1, **characterised in that** the first operating unit (1) is located in the roof area or in the centre console (6) of a motor vehicle.

11. Operating system according to Claim 1, **characterised in that** a second operating unit (2, 3, 4) is implemented by a switch, a rotary switch or a rotary actuator (4).

12. Operating system according to Claim 1, **characterised in that** a second operating unit (2, 3, 4) is a touchpad (2).

13. Operating system according to Claim 1, **characterised in that** a second operating unit (2, 3, 4) is a gear selector lever (3).

14. Operating system according to Claim 1, **characterised in that** the analysis unit (5) is composed of a plurality of electronic units which are assigned to the operating units (1, 2, 3, 4) and which communicate with each other.

## Revendications

1. Système de commande pour un véhicule automobile,
avec une première unité de commande (1) pour la détection sans contact de gestes utilisateur, avec au moins une deuxième unité de commande (2, 3, 4) pour la détection d'entrées utilisateur, dont l'actionnement, exige un accès tactile de la part d'une personne, et avec une unité d'évaluation (5), qui est associée aux fonctions de commande des gestes utilisateur et des entrées utilisateur détectés par les unités de commande (1, 2, 3, 4), **caractérisé en ce que** l'unité d'évaluation (5) est conçue pour vérifier si un geste utilisateur ou une entrée utilisateur a été détecté simultanément à l'intérieur de la même fenêtre et dans le même espace local, et que l'unité d'évaluation (5), en cas de résultat positif de la vérification, modifie ou annule la fonction de commande associée au geste utilisateur.

2. Système de commande selon la revendication 1, **caractérisé en ce que** l'unité d'évaluation (5) présente une liste d'exceptions de combinaisons connues de gestes utilisateur et d'entrées utilisateur, lors de la saisie commune desquelles l'unité d'évaluation (5) ni ne modifie ni n'annule la fonction de commande associée au geste utilisateur.

3. Système de commande selon la revendication 1, **caractérisé en ce que** l'unité d'évaluation (5), ne déclenche qu'après l'écoulement d'un laps de temps prédéterminé des fonctions de commande découlant de gestes de commande reconnus.

4. Système de commande selon la revendication 1, **caractérisé en ce que** la première unité de commande (1) forme un dispositif de détection pour la reconnaissance de gestes de mains.

5. Système de commande selon la revendication 1, **caractérisé en ce que** la première unité de commande (1) forme un dispositif de détection pour la reconnaissance de gestes de doigts.

6. Système de commande selon la revendication 1, **caractérisé en ce que** la première unité de commande (1) présente des détecteurs capacitifs.

7. Système de commande selon la revendication 1, **caractérisé en ce que** la première unité de commande (1) présente des détecteurs optiques.

8. Système de commande selon la revendication 7, **caractérisé en ce que** la première unité de commande (1) présente un dispositif de détection pour la saisie d'images.

9. Système de commande selon la revendication 8, **caractérisé en ce qu'**un composant du dispositif de saisie d'images est une caméra stéréo, une caméra time-of-flight ou une caméra thermique.

10. Système de commande selon la revendication 1, **caractérisé en ce que** la première unité de commande (1) est disposée dans la région de la toiture ou dans la console centrale (6) d'un véhicule automobile.

11. Système de commande selon la revendication 1, **caractérisé en ce qu'**une deuxième unité de commande (2, 3, 4) est formée par un commutateur, un commutateur rotatif oud un régleur rotatif (4).

12. Système de commande selon la revendication 1, **caractérisé en ce qu'**une deuxième unité de commande (2, 3, 4) est un pavé tactile (2).

13. Système de commande selon la revendication 1, **caractérisé en ce qu'**une deuxième unité de commande (2, 3, 4) est un levier sélecteur (3).

14. Système de commande selon la revendication 1, caractérisé en ce l'unité d'évaluation (5) consiste en plusieurs unités électroniques, qui, associées aux unités de commande (1, 2, 3, 4), communiquent les unes avec les autres.
